(19) Europäisches Patentamt
European Patent Office
Office européen des brevets

(11) **EP 4 440 059 A1**

(12) **EUROPEAN PATENT APPLICATION**

(43) Date of publication:
**02.10.2024 Bulletin 2024/40**

(21) Application number: **24168085.9**

(22) Date of filing: **02.04.2024**

(51) International Patent Classification (IPC):
*H04L 41/0604* (2022.01)   *H04L 41/0631* (2022.01)
*H04L 41/142* (2022.01)   *H04L 41/16* (2022.01)
*H04L 41/22* (2022.01)

(52) Cooperative Patent Classification (CPC):
**H04L 41/142; H04L 41/0609; H04L 41/064;
H04L 41/16;** H04L 41/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 US 202318129372**

(71) Applicant: **Anritsu Company
Morgan Hill, California 95037 (US)**

(72) Inventors:
• **CHIAPPETTA, Claudio
Morgan Hill, CA 95037 (US)**
• **CORNET, Nicolas
Morgan Hill, CA 95037 (US)**
• **MURRAY, Brian
Morgan Hill, CA 95037 (US)**

(74) Representative: **Biallo, Dario et al
Barzanò & Zanardo Milano S.p.A.
Via Borgonuovo, 10
20121 Milano (IT)**

(54) **CASE VOLUME SEVERITY LEVEL LISTS**

(57) Circuits, methods, and apparatus that can sort and prioritize anomalies and errors in a wireless communication system. An example can collect transaction data over a network for a first duration. A detection analysis using a detection algorithm can be run on the collected data to detect a number of events. Parameters can be provided and used to generate a trend moving average and a long-term moving average based on the number of detected events determined by the detection algorithm. For each of a number of sets of parameters, a trend moving average can be compared to a long-term moving average. Cases where the trend moving average exceeds the long-term moving average can be identified. For each identified case, a determination as to whether the case is long enough to be used can be made, and a severity score can be determined for each used case. The used cases can then be classified into several severity levels based on their severity scores. This information can then be provided to a user, or further processed and provided to a user. This information can be provided in graphical, tabular, or other format or combination of formats.

EP 4 440 059 A1

```
┌─────────────────────────────────────────────────┐
│   COLLECT DATA OVER A FIRST PERIOD OF TIME        │── 110
└─────────────────────────────────────────────────┘
                        │
                        ▼
┌─────────────────────────────────────────────────┐
│ DETECT CASES AND DETERMINE WHICH CASES TO USE,    │── 120
│           THEN RANK USED CASES                    │
└─────────────────────────────────────────────────┘
                        │
                        ▼
┌─────────────────────────────────────────────────┐
│     CLASSIFY CASES INTO SEVERITY LEVELS           │── 130
└─────────────────────────────────────────────────┘
                        │
                        ▼
┌─────────────────────────────────────────────────┐
│   PROVIDE PARAMETERS FOR EACH SEVERITY LEVEL      │── 140
└─────────────────────────────────────────────────┘
```

FIG. 1

**Description**

**CROSS-REFERENCES TO RELATED APPLICATIONS**

This application claims priority to United States patent application number 18/129,372, filed March 31, 2023, which is incorporated by reference.

**BACKGROUND**

Wireless communication has become ubiquitous in daily life. As an example, cellular communication has become pervasive. Tremendous amounts of data and transactions are generated and carried over cellular networks. Voice calls, SMT messages, data transfers, and other transactions occur in large volumes.

On occasion, an anomaly or error can occur during one of these transactions. Some anomalies or errors can be quite noticeable. For example, a voice call can be dropped. Other anomalies or errors can be less noticeable. For example, a text message can be delayed, a call connection can be delayed, or other anomaly or error can occur. Such anomalies or errors can be infrequent. But even when only a small percentage of transactions have an anomaly or error, the result can be a large total number of effected transactions.

Network software can track anomaly and error information about these voice calls, SMT messages, data transfers, and other transactions. These events can be logged over time, for example, a number of events can be tracked on a minute-by-minute or other interval-by-interval basis. A carrier can then attempt to diagnose and correct system problems and improve network configurations and other parameters to reduce the numbers of errors and anomalies.

But it can be difficult to sort through the huge amounts of data that can result from such an analysis. This can make it difficult to properly allocate efforts such that a maximum amount of improvement can be gained for time and resources spent analyzing these errors. For example, a network is only improved a minor amount if a rare problem effecting a small amount of subscribers is corrected.

Thus, what is needed are circuits, methods, and apparatus that can sort and prioritize anomalies and errors in a wireless communication system.

**SUMMARY**

Accordingly, embodiments of the present invention can provide circuits, methods, and apparatus that can sort and prioritize anomalies and errors in a wireless communication system. An illustrative embodiment of the present invention can collect transaction data over a network for a first period of time. A detection analysis using a detection algorithm can be run on the collected data to detect a number of events. Parameters can be provided and used to generate a trend moving average and a long-term moving average based on the number of detected events determined by the detection algorithm. For each of a number of sets of parameters, a trend moving average can be compared to a long-term moving average. Cases where the trend moving average exceeds the long-term moving average can be identified. For each identified case, a determination as to whether the case is long enough to be used can be made, and a severity score can be determined for each used case. The used cases can then be classified into several severity levels based on their severity scores. This information can then be provided to a user, or further processed and provided to a user. This information can be provided in graphical, tabular, or other format or combination of formats.

Initially, transaction data can be collected over a network for a first duration or a first period of time. In these and other embodiments of the present invention, the first duration can be various lengths of time, such as one or more minutes, one or more hours, one or more days, one or more weeks, one or more months, or longer. The data can include information regarding transactions on a cellular or other network.

A detection analysis using a detection algorithm can be run on the collected data to generate a set of detected events. In these and other embodiments of the present invention, various detection algorithms can be used. A detection algorithm can be an anomaly detection algorithm that detects errors and other anomalies. A detection algorithm can detect parameters that are not errors or anomalies, such as a number of users, call volume, and other parameters. A selected detection algorithm can count somewhat innocuous events, such as call connection time, traffic volume, and the like. The selected detection algorithm can count more substantive events, such as dropped calls. Various types of algorithms can be used to find these anomalies and errors. For example, a SIRCA algorithm can be used to find errors, such as dropped calls. A SARTA (set-up and response time analysis) can be used to find procedural delays, such as call connection times, which can indicate congestion and other potential network problems. A VOMAN (volume analysis) can track various metrics, such as a number of calls from an area.

In these and other embodiments of the present invention, a number of events can be found by a detection algorithm in various ways for various durations. For example, a number of events can be found on an interval-by-interval bases, for example, on a minute-by-minute, or hour-by-hour basis. Numbers of events can be found for each interval for a number of hours, a number of days, a number of weeks, or for a longer duration. The resulting numbers of events per interval can form a set of detected events.

The set of detected events can then be analyzed. For example, where the detected events in a set of detected events are anomalies, groups of these events can be isolated for further analysis to improve network performance. This grouping can be performed to gather detected events together in such a way such that analyzing a group can have a significant impact towards improving network performance, particularly as compared to simply analyzing detected events at random.

In these and other embodiments of the present invention, detected events in a set of detected events can be grouped in various ways. For example, the set of detected events can be compared to a threshold, and a case can be identified when the number of detected events exceeds the threshold. The threshold can be generated in various ways. For example, it can be set as a constant value or it can be set as a variable value. The thresholds can be data-dependent thresholds. The thresholds can be time-dependent thresholds. The thresholds can be time and data-dependent thresholds. For example, the threshold can be variable and can be based on an exponentially-weighted moving average or other type of moving average.

In these and other embodiments of the present invention, a threshold can be between two moving averages, specifically a trend moving average and a long-term moving average. Both the trend moving average and a long-term moving average can be exponentially-weighted moving averages. The trend moving average can either directly track the incoming detected event data, or the trend moving average can act to smooth or filter the incoming detected event data. The long-term moving average can be a function of the incoming detected event data offset by a value, which can be an absolute deviation parameter. The long-term moving average can either directly track the offset incoming detected event data, or the long-term moving average can act to smooth or filter the offset incoming detected event data.

The trend moving average and the long-term moving average can be based on various parameters. That is, various parameters can be selected and the trend moving average and the long-term moving average can be generated based on these parameters. These parameters can include trend samples, long-term samples, relative standard deviation, absolute standard deviation, and back propagation. These parameters can the trend moving average and the long-term moving average in various ways. For example, trend samples can be the number of samples to use when calculating the short-term average, where a sample is a number of events at an interval. An increase in the number of trend samples used in determining a threshold can give a bigger picture and reduce the number of short duration events. The increase can act to filter or smooth the trend moving average as compared to the set of original events. When the trend sample parameter is 1, the trend moving average is equal to the set of original events. Long-term samples can be the number of samples to use to calculate the long-term moving average. An increase in the long-term samples used can reduce the volatility of the threshold, leading to an increase in cases. The absolute deviation can be used to reduce the number of identified events where only a limited number of subscribers are effected by increasing a separation between the trend moving-average and the long-term moving average. This is also achieved by the relative standard deviation. Reducing the relative standard deviation can result in more events, and the events can last longer since the reduced relative standard deviation is more easily exceeded. The back propagation can be used as well. Back propagation can determine how fast previous samples used in both the trend moving average and long-term moving average decay. Increasing this value can increase the decay. This can reduce the duration of long lasting cases since new values are more quickly normalized.

Values for the sets of parameters can be found in various ways. For example, they can be predetermined. They can be predetermined for each different detection algorithm. They can be user-input. They can be automatically generated by previously executed runs of these or other embodiments of the present invention. They can be based on a history of the observed or other networks.

In these and other embodiments of the present invention, different numbers and different types of long-term moving averages can be used and the set of long-term moving averages can be generated in various ways. For example, 8, 16, 32, 64, or other numbers of long-term moving averages can be used. In these and other embodiments of the present invention, one, two, three, or more than three different values for each of the parameters can be used. For example, when four parameters including trend samples, long-term samples, absolute deviation, and relative deviation are used, two values can be used for each parameter and a total of 16 thresholds can be generated. A reduced number of total thresholds can help to speed processing. Other parameters, numbers of parameters, and numbers of parameter values for each parameter can be used. The number of trend moving averages and long-term moving averages can be predetermined or dynamically adjusted. The trend moving averages and long-term moving averages can be data-dependent moving averages. The trend moving averages and long-term moving averages can be time-dependent moving averages. The trend moving averages and long-term moving averages can be time and data-dependent moving averages. The long-term moving averages, as well as the trend moving average, can be based on an exponentially-weighted moving average or other type of average.

For each set of parameters, the trend moving average can be compared to the long-term moving average. When a value of the trend moving average exceeds the long-term moving average, a case can be identified for further analysis, where the case can include the value of the detected events and the time when the value occurred. In some embodiments, when values of the trend moving average exceeds the long-term moving average for a number m minutes (or m samples), a case can be identified for further analysis, where the case can include the values and the range of time when the values occurred. In some embodiments, when values of the trend moving average exceed the long-term moving average for m minutes for more than a number n of long-term moving averages in the set of long-term moving averages, a case can be identified for further analysis, where the case can include the values and the range of time when the values occurred. These cases can further include the number of long-term moving averages that were exceeded by their corresponding trend moving average.

Each of the cases can then be ranked. That is, each of the identified cases can then be given a severity score, where the severity score can track a number of anomalies that can be rectified if the case were to be resolved. That is, the severity score can track the degree to which a network could be improved if the case were to be resolved. The severity score can include several factors. For example, the maximum value of detected events during a case can be used as part of a severity score. The average value of the samples in the case can also be used. The number of minutes or samples in the case can also be used. In one embodiment of the present invention, some or all of these and other factors can be combined to form a severity score. For example, these values can be summed to form a severity score. These values can be weighted, that is, multiplied by a weighting factor, then summed to form a severity score.

These severity scores can then be used to classify the cases into severity levels. These classifications can then be provided to a user. The user can then use the classifications by severity level to maximize the improvement to the network for a given time spent troubleshooting.

The cases can be classified in various ways. Cases can be classified into severity levels based on their severity score. The cases can be classified into various numbers of severity levels. For example, cases can be classified into three, five, ten, or more than 10 severity levels.

The cases can be classified into severity levels based on their severity scores in different ways. For example, the cases can be clustered using a k-means algorithm (or Lloyd's algorithm, k-means clustering, k-medians clustering, k-medoids clustering, or other clustering or partitioning algorithm or technique. Silhouette scoring can be used find a best number of severity levels to use.

Cases can be classified into severity levels based on their severity score in other ways. For example, a range of severity scores can be found for the used cases to be categorized. The range can be divided into a number of subranges or severity levels and cases can be placed in one of the severity levels based on their severity score. For example, where a range of severity scores runs from 100 to 1000, nine subranges or severity levels from 100-200, 201-300, 301-400, 401-500, 501-600, 601-700, 701-800, 801-900, and 901-1000 can be used. Cases having a severity score of 150 can be placed in the lowest severity level, while cases having a value of 950 can be placed in the highest severity level.

Still other techniques can be used, and some or all of these techniques can be combined. For example, the highest number of severity levels for which there is no duplicate level can be found. This can be done by comparing the parameters used in generating the thresholds. This can also or instead be done by examining similarities among cases in different levels.

When cases are classified, the highest severity scores can identify a smaller number of cases that have long durations and effect a large number of subscribers, while lower severity scores can identify a large number of cases having shorter durations and effect a smaller of subscribers.

Once the cases are classified, representative sets of parameters used to generate the thresholds can be found and provided to a user. The objective can be to find, for each severity level, a set of parameters used to generate a threshold that best identifies the cases in the severity level as compared to any of the other parameters in the set of parameters. That is, a set of parameters that best uniquely identifies a severity level as compared to levels above and below that severity level. The users can then use these parameters in the future.

This set of parameters can be found in various ways. For example, a Wroclaw index, a weighted Wroclaw index, or other algorithm can be used. This algorithm can employ two criteria. The first can be identified by the symbol L, and for a severity level can be defined as the ratio of the sum of minutes raised by a case belonging to that or a higher severity level and the sum of minutes that are part of that severity level or higher. The second criteria can be identified by the symbol L, and for a severity level can be defined as the sum of minutes detected as cases that are part of that severity level or lower. For each trend moving average and long-term moving average, a value W can be found by summing a square of a difference between a value of L for that trend moving average and long-term moving average and a maximum value of L for all trend moving averages and long-term moving averages in the severity level with a square of a difference between a value of C for that trend moving average and long-term moving average and a maximum value of C for all trend moving averages and long-term moving averages in the severity level. The trend moving average and long-term moving average and corresponding set of parameters that have the lowest value of W for that severity level can be stored and provided to a user. In these and other embodiments of the present invention, each square term can be weighted by multiplying with a factor, where the factor can be greater than one, one, or less than one.

In these and other embodiments of the present invention, a case volume severity list can include one, two, three, four, five, six, or more than six entries. The entries can be selected by a user and the cases identified can be highlighted on a time-graph of the detect event data. This can allow a user to focus on a reduced number of cases, where the reduced number of cases are important cases and resolving the reduced number of cases can have a large impact.

These and other embodiments of the present invention can provide at least two benefits. First, during set up, an operator does not need to find or determine parameters themselves, since the parameters for the various thresholds are automatically generated. Secondly, an operator can quickly identify a reduced number of cases that each have a disproportionate or outsized impact as compared to other cases.

After a user has selected a case volume severity level from the case volume severity level list, the corresponding parameters can be used again with new or updated data. Alternatively, the parameters can be updated to provide similarly useful results with a new set of data. For example, an entry in a case volume severity level list can provide a number of cases, each having a number of detected events, which can be referred to as a signal. This signal can rise above a background number of detected events, which can be referred to as noise. A first signal-to-noise ratio can be present for data collected and analyzed over a first duration. The parameters can be adjusted to provide a similar signal-to-noise ratio for data collected and analyzed over a second duration, the second duration subsequent to the first duration. The number of identified cases can be the same or different for the updated parameters for the second duration as compared to the parameters in the previously selected entry in the case volume severity level list, though the relevancy and import of the identified cases can be similar.

Various embodiments of the present invention can incorporate one or more of these and the other features described herein. A better understanding of the nature and advantages of the present invention can be gained by reference to the following detailed description and the accompanying drawings.

## BRIEF DESCRIPTION OF THE DRAWINGS

Figure 1 is a flowchart of a method of generating a case volume severity level list according to an embodiment of the present invention;

Figure 2A illustrates data for a case volume severity list and Figure 2B is an example of a case volume severity level list according to an embodiment of the present invention;

Figure 3 illustrates the detection of cases in a set of detected events according to an embodiment of the present invention;

Figure 4 is a flowchart of a method of detecting cases in a set of detected events according to an embodiment of the present invention;

Figure 5 is a flowchart of a method of generating a case volume severity level list according to an embodiment of the present invention;

Figures 6A through 6C illustrate effects of varying an absolute deviation in a method of detecting cases according to an embodiment of the present invention;

Figures 7A and 7B illustrate an effect of varying a long-term samples parameter in a method of detecting cases according to an embodiment of the present invention;

Figures 8A and 8B illustrate an effect of varying a trend samples parameter in a method of detecting cases according to an embodiment of the present invention;

Figures 9A and 9B illustrate an effect of varying relative standard deviation parameter in a method of detecting cases according to an embodiment of the present invention; and

Figures 10A and 10B illustrate an effect of varying a back propagation parameter in a method of detecting cases according to an embodiment of the present invention.

## DESCRIPTION OF ILLUSTRATIVE EMBODIMENTS

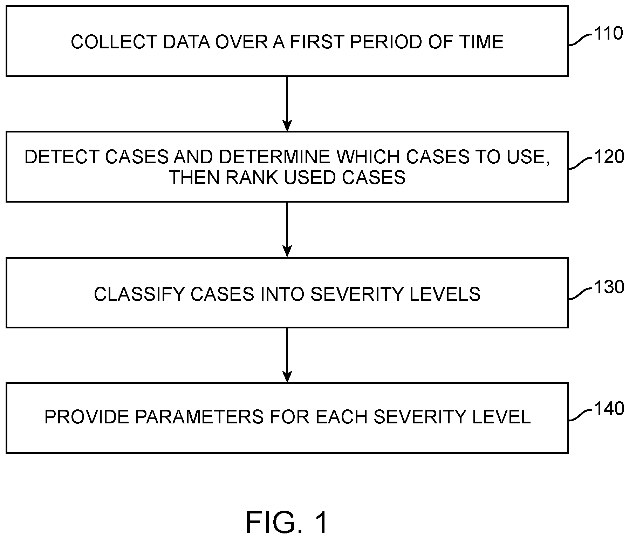

Figure 1 is a flowchart of a method of generating a case volume severity level list according to an embodiment of the present invention. In act 110, data can be collected for a first period of time. In these and other embodiments of the present invention, the first duration can be various lengths of time, such as one or more minutes, one or more hours, one or more days, one or more weeks, one or more months, or longer. The data can include information regarding transactions on a cellular or other network.

A detection algorithm can be selected and applied to the collected data and a number of events per interval of time can be detected to generate a set of detected events. The selected detection algorithm can detect somewhat innocuous events, such as call connection time, traffic volume, and the like. The selected detection algorithm can detect more substantive events, such as dropped calls. Various types of algorithms can be used to detect these anomalies and errors. For example, a SIRCA algorithm can be used to detect errors, such as dropped calls. A SARTA can be used to detect procedural delays, such as call connection times, which can indicate congestion and other potential network problems. A VOMAN can detect various metrics, such as a number of calls from an area.

In these and other embodiments of the present invention, a number of events can be found by a detection algorithm in various ways for various durations. For example, a number of events can be found on an interval-by-interval bases, for example, on a minute-by-minute, or hour-by-hour basis. Numbers of events can be found for each interval for a number of hours, a number of days, a number of weeks, or for a longer duration.

In act 120, cases can be detected and a determination of which cases to use can be made. The used cases can then be ranked. For example, two moving averages can be compared to each other. More specifically, multiple sets of parameters can be received. Each set of parameters can be used to generate a trend moving average and a long-term moving average that are each based on the set of detected events. The trend moving average can be compared to the long-term moving average. When the trend moving average exceeds the long-term moving average, a case can be identified. When the case has a sufficient duration, a determination can be made to use the case. The used cases can then be assigned a severity score and ranked accordingly.

In act 130, used cases can be clustered into a number of severity levels. The used cases can be clustered using one or more clustering algorithms. These severity levels can be used by a user to help focus efforts on network problems whose solutions can be effective and can yield sizeable improvements.

In act 140, parameters for each severity level can be generated. These parameters can be representative of the cases in the severity level. That is, they can be used to find many, a substantial majority, or all of the cases in the severity level. The various computational steps shown here can be performed by a portable computing device, desktop computing device, workstation, or other electronic computing device or system.

This information can be provided to a user in a textual, tabular, graphical, or other type of format or types of formats. For example, a case volume severity list including multiple severity levels can be generated where the parameters and number of cases identified by those parameters in each severity level can be provided. These case volume severity lists can be displayed using a graphical-user interface on a monitor of a portable computing device, desktop computing device, workstation, or other electronic device or system. An example of data for a case volume severity level list and an example of a case volume severity level list are shown in the following figures.

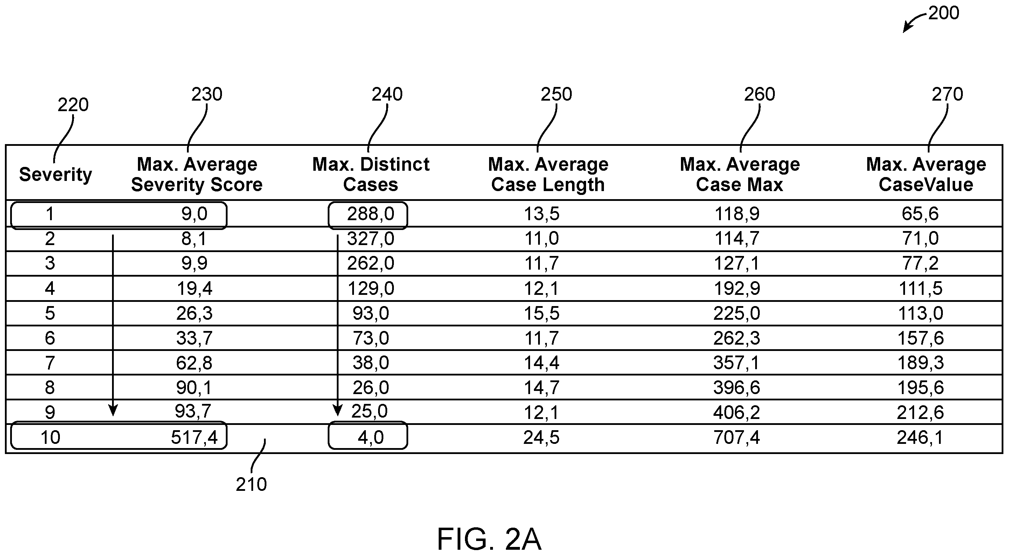

Figure 2A illustrates data for a case volume severity level list according to an embodiment of the present invention. Data table 200 can include a number of entries 210. Data table 200 can include one, two, three, four, five, six, or more than six entries 210. Each entry can list a severity level 220 and a maximum average severity score 230. A number of cases 240 that were identified at each level can be listed. An average case length 250, maximum case value 260, and average case value 270 can be provided. Representative parameters, such as an absolute deviation, relative standard deviation, trend samples, and long-term samples can also be provided for each severity level 220 and included in a case volume severity level list, as shown in the following figure.

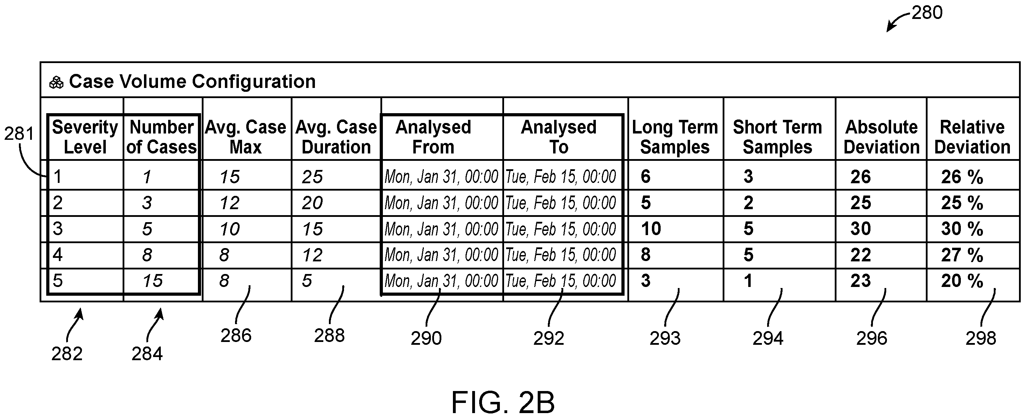

Figure 2B is an example of a case volume severity level list according to an embodiment of the present invention. Case volume severity level list 280 can include a number of entries 281. Case volume severity level list 280 can include one, two, three, four, five, six, or more than six entries 281. Each entry can list a severity level 282 and a number of cases 284 in that severity level 282. An average of the maximum value 286 of the cases in each level can be included, along with the average case duration 288. The start 290 and stop times 292 for the analysis can be included. Representative parameters, such as long-term samples 293, short term or trend sample 294, absolute deviation 296, and relative deviation 298 can also be provided for each severity level 282.

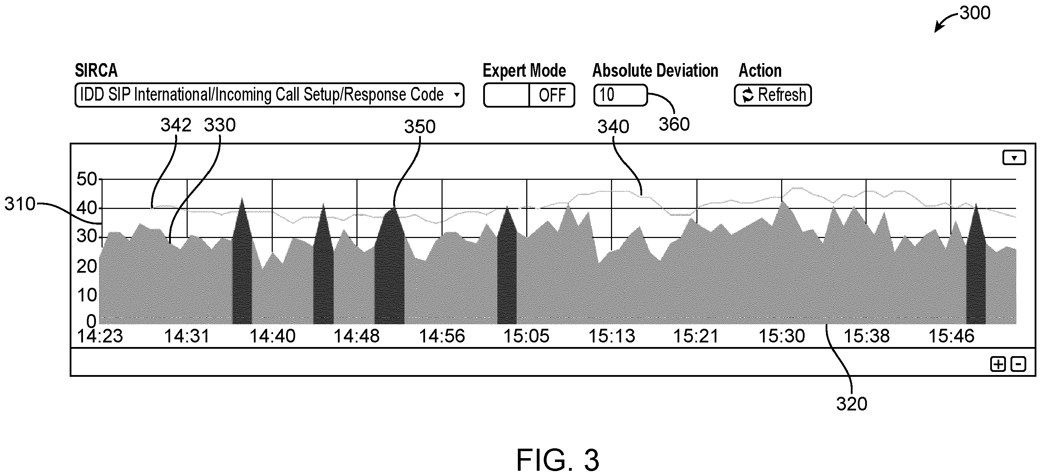

Figure 3 illustrates the detection of cases in a set of detected events according to an embodiment of the present invention. In this figure, a trend moving average 330 and long-term moving average 340 are plotted as a function of cases along X axis 310 and time along Y axis 320. Trend moving average 330 can be the number of detected events when the trend sample parameter is equal to 1. The long-term moving average 340 can be smoothed by the long-term samples parameter and offset from the trend moving average 330 by the absolute deviation 360, which is 10 in this example. Cases 350 can be identified when the trend moving average 330 exceeds the long-term moving average 340. When the long-term moving average is smoothed using the long-term samples, the start of the long-term moving average 340 might be delayed until time 324 as shown. For example, if five long-term samples are used, the long-term moving average might be delayed by a corresponding five time intervals (such as minutes.) Examples of how trend moving average 330 and long-term moving average are generated are shown in the following figure.

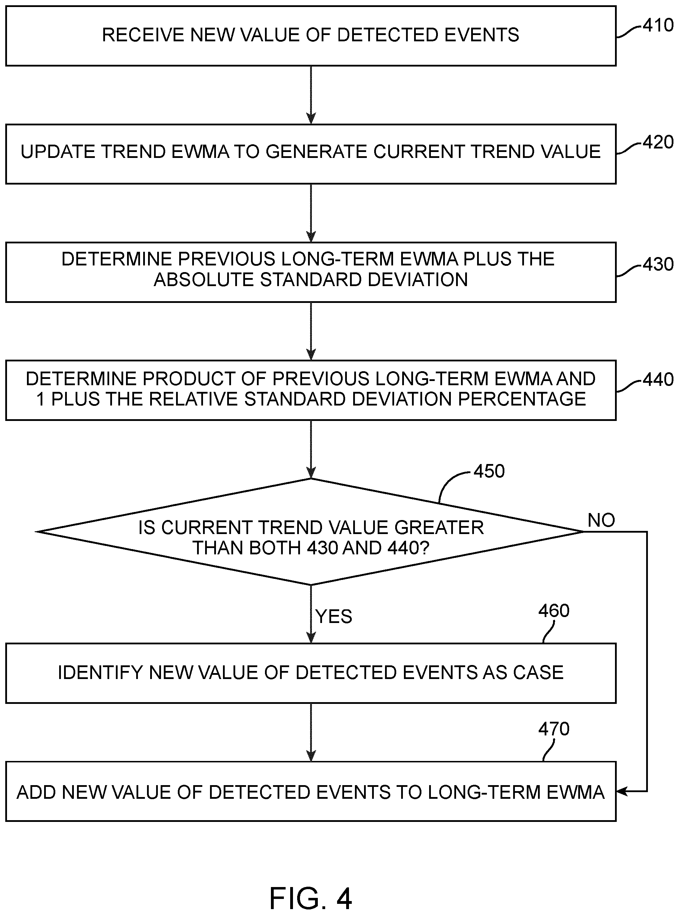

Figure 4 is a flowchart of a method of detecting cases in a set of detected events according to an embodiment of the present invention. In act 410, a new value for a number of detected events during a time interval is received. In act 420, the trend moving average, which can be an exponentially-weighted moving average, can be updated using the new value. In an example, the trend moving average can be found by the following equations:

$$for\ (t \leq K):\quad Et=\ avg(V1..Vt);\ \text{and} \qquad \text{Eq. 1}$$

Where for a first K time intervals, the moving average is equal to the arithmetic mean of the numbers of detected events.

$$for\ (t > K):\ \alpha=\ 2/(1+K),\ \text{and}\ Et=\alpha{\times}Vt+(1-\alpha){\times}E(t-1) \qquad \text{Eq. 2}$$

where a is the decay and is determined by the value of K, and K can be the trend sample parameter. The updated trend moving average can be the current trend value.

Once the trend moving average is updated, it can be compared to the larger of two values, where the larger of the two values is the long-term moving average. The two values can be found by the following equations:

$$E(t-1)+\ \text{the Absolute deviation parameter;}$$

and

$$E(t-1){\times}(1+\text{the Relative standard deviation parameter})$$

When the updated trend moving average, also referred to as the current trend value, exceeds the value of both equations, a case can be identified. The new value can then be used to update the long-term moving average, again using equations 1 and 2 above, where K is the long-term sample parameter. To determine the long-term moving average, the absolute deviation parameter is added to equation 1 and equation 2 above:

In an example, the long-term moving average can be found by the following equations:

$$for\ (t \leq K):\quad Et=\ avg(V1..Vt)\ +\text{Absolute deviation parameter}$$

Where for a first K time intervals, the moving average is equal to the arithmetic mean of the numbers of detected events plus the absolute deviation parameter.

$$for\ (t > K):\ \alpha=2/(1+K),\ \text{and}\ Et=\alpha{\times}Vt+(1-\alpha){\times}E(t\text{-}1)+\ \text{Absolute deviation parameter}$$

where $\alpha$ is the decay and is determined by the value of K, and K can be the long-term sample parameter.

**Data Collection**

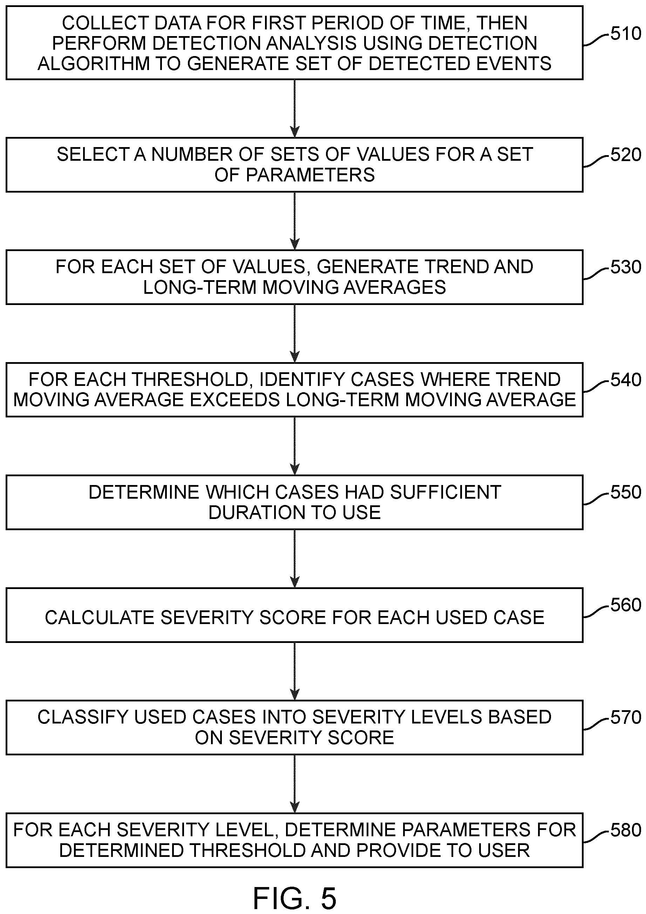

Figure 5 is a flowchart of a method of generating a case volume severity level list according to an embodiment of the present invention. Initially, transaction data can be collected over a network for a first duration or a first period of time. In act 510, transaction data can be collected over a network for a first period of time. In these and other embodiments of the present invention, the first duration can be various lengths of time, such as one or more minutes, one or more hours, one or more days, one or more weeks, one or more months, or longer. The data can include information regarding transactions on a cellular or other network. This collected data can form a data set.

Also in act 510, a detection analysis using a detection algorithm can be run on the data set to generate a set of detected events. In these and other embodiments of the present invention, various detection algorithms can be used. A selected detection algorithm can count somewhat innocuous events, such as call connection time, traffic volume, and the like. The selected detection algorithm can count more substantive events, such as dropped calls. Various types of algorithms can be used to find these anomalies and errors. For example, a SIRCA algorithm can be used to find errors, such as dropped calls. A SARTA (set-up and response time analysis) can be used to find procedural delays, such as call connection times, which can indicate congestion and other potential network problems. A VOMAN (volume analysis) can track various metrics, such as a number of calls from an area.

In these and other embodiments of the present invention, a number of events can be found by a detection algorithm in various ways for various durations. For example, a number of events can be found on an interval-by-interval bases, for example, on a minute-by-minute, or hour-by-hour basis. Numbers of events can be found for each interval for a number of hours, a number of days, a number of weeks, or for a longer duration. The resulting numbers of events per interval can form a set of detected events.

**Case Ranking**

The set of detected events can then be analyzed. For example, where the detected events in a set of detected events are anomalies, groups of these events can be isolated for further analysis to improve network performance. This grouping can gather detected events together in such a way such that analyzing a group can have a significant impact towards improving network performance, particularly as compared to simply analyzing detected events at random.

In these and other embodiments of the present invention, detected events in a set of detected events can be grouped in various ways. For example, the set of detected events can be compared to a threshold, and a case can be identified when the number of detected events exceeds the threshold. The threshold can be generated in various ways. For example, it can be set as a constant value or it can be set as a variable value. The thresholds can be data-dependent thresholds. The thresholds can be time-dependent thresholds. The thresholds can be time and data-dependent thresholds. For example, the threshold can be variable and can be based on an exponentially-weighted moving average or other type of average.

In these and other embodiments of the present invention, a threshold can be between two moving averages, specifically a trend moving average and a long-term moving average. Both the trend moving average and a long-term moving average can be exponentially-weighted moving averages. The trend moving average can either directly track the incoming detected event data, or the trend moving average can act to smooth or filter the incoming detected event data. The long-term moving average can be a function of the incoming detected event data offset by a value. The long-term moving average can either directly track the offset incoming detected event data, or the long-term moving average can act to smooth or filter the offset incoming detected event data.

The trend moving average and the long-term moving average can be based on various parameters. That is, various parameters can be selected and the trend moving average and the long-term moving average can be generated based on these parameters. These parameters can include trend samples, long-term samples, relative standard deviation, absolute standard deviation, and back propagation. These parameters can the trend moving average and the long-term moving average in various ways. For example, trend samples can be the number of samples to use when calculating the short-term average, where a sample is a number of events at an interval. An increase in the number of trend samples used in determining a threshold can give a bigger picture and reduce the number of short duration events. The increase can act to filter or smooth the trend moving average as compared to the set of detected events. When the trend sample parameter is 1, the trend moving average is equal to the set of original events. Long-term samples can be the number of samples to use to calculate the long-term moving average. An increase in the long-term samples used can reduce the volatility of the threshold, leading to an increase in cases. The absolute deviation can be used to reduce the number of identified events where only a limited number of subscribers are effected by increasing a separation between the trend moving-average and the long-term moving average. This is also achieved by the relative standard deviation. Reducing the relative standard deviation can result in more events, and the events can last longer since the reduced relative standard deviation is more easily exceeded. The back propagation can be used. Back propagation can determine how fast previous samples used in both the trend moving average and long-term moving average decay. Increasing this value can increase the decay. This can reduce the duration of long lasting cases since new values are more quickly normalized.

Values for the sets of parameters can be found in various ways. For example, they can be predetermined. They can be predetermined for each different detection algorithm. They can be user-input. They can be automatically generated by previously executed runs of these or other embodiments of the present invention. They can be based on a history of the observed or other networks.

In these and other embodiments of the present invention, cases can be identified in various ways. For example, a trend moving average can be compared to a long-term moving average and a case can be identified when the trend moving average exceeds the long-term moving average. These moving averages can be generated in various ways. For example, they can be set as constant values or they can be set as variable values. The moving averages can be data-dependent moving averages. The moving averages can be time-dependent moving averages. The moving averages can be time and data-dependent moving averages. For example, the moving averages can be variable and can be based on exponentially-weighted moving averages or other type of averages.

In act 530, trend and long-term moving averages can be determined for the set of parameters. Further details of these thresholds can be found in Figure 4.

More specifically, a trend moving average and a long-term moving average can be computed for each set values for the set of parameters. In these and other embodiments of the present invention, one, two, three, or more than three different values for each of the parameters can be used. For example, four parameters including trend samples, long-term samples, absolute deviation, and relative deviation are used, two values can be used for each parameter and a total of 16 thresholds can be generated. A reduced number of total thresholds can help to speed processing. Other parameters, numbers of parameters, and numbers of parameter values for each parameter can be used. In these and other embodiments of the present invention, only the absolute deviation parameter is under variable control to simplify data manipulation.

The trend moving average can then be compared to the long-term moving average in act 540. When the trend moving average exceeds the long-term moving average, a case can be identified for further analysis, where the case can include the value (such as a number of effected subscribers) and the time when the value occurred.

In these and other embodiments, very short cases might be dismissed from further consideration to reduce a total amount of data. Accordingly, in some embodiments, a determination as to whether a case is of sufficient duration can be made. The cases with sufficient duration can be referred to as a used case, or case to be used. In act 550, when the trend moving average exceeds the long-term moving average for a number m minutes (or m samples), a case can be identified for further analysis, where the case can include the values and the range of time when the values occurred. In some embodiments, when the trend moving average exceeds the long-term moving average for m minutes for more than a number n of thresholds in the set of thresholds, a case can be identified for further analysis, where the case can include the values and the range of time when the values occurred. Identifying data for these cases can further include the number long-term moving averages that were exceeded by the trend moving averages.

Each of the used cases can then be ranked. That is, in act 560, each of the identified cases to be used can then be given a severity score, where the severity score can track a number of anomalies that can be rectified if the case were to be resolved. That is, the severity score can track the degree to which a network could be improved if the case were to be resolved. The severity score can include several factors. For example, the maximum value of the detected events during a case can be used as part of a severity score. The average value of the samples in the case can also be used. The number of minutes or samples in the case can also be used. In one embodiment of the present invention, some or all of these and other factors can be combined to form a severity score. For example, these values can be summed to form a severity score. These values can be weighted, that is, multiplied by a weighting factor, then summed to form a severity score. For example, the severity score can be found by:

$$W1*CaseMax+ W2*AverageCaseValue+ W3*CaseLength$$

where CaseMax is a maximum value during a case, AverageCaseValue is the average value of the number of events during a case, and CaseLength is a length of the case, and W1, W2, and W3 are weighting factors that can be varied to emphasis different characteristics of the cases. In these and other embodiments of the present invention, the values for the weighting can be one, though they can instead be less than one or greater than one. Other factors can be considered in ranking cases in these and other embodiments of the present invention. For example, a number of thresholds that are exceeded by a case can be considered in ranking that case. For example, the severity scores calculated each time a case is identified can be accumulated or added together.

**Case Classification**

In act 570, these severity scores can then be used to classify the cases into severity levels. These severity scores can then be used to classify the cases into severity levels. These classifications by severity level can then be provided to a user, as shown in Figure 2B. The user can then use the classifications by severity level to maximize the improvement to the network for a given time spent troubleshooting.

The cases can be classified in various ways. Cases can be classified into severity levels based on their severity score. The cases can be classified into various numbers of severity levels. For example, cases can be classified into three, five, ten, or more than 10 severity levels.

The cases can be classified into severity levels based on their severity scores in different ways. For example, the cases can be clustered using a k-means algorithm (or Lloyd's algorithm, k-means clustering, k-medians clustering, k-medoids clustering, or other clustering or partitioning algorithm or technique. Silhouette scoring can be used find a best number of severity levels to use.

Cases can be classified into severity levels based on their severity score in other ways. For example, a range of severity scores can be found for the used cases to be categorized. The range can be divided into a number of subranges or severity levels and cases can be placed in one of the severity levels based on their severity score. For example, where a range of severity scores runs from 100 to 1000, nine subranges or severity levels from 100-200, 201-300, 301-400, 401-500, 501-600, 601-700, 701-800, 801-900, and 901-1000 can be used. Cases having a severity score of 150 can be placed in the lowest severity level, while cases having a value of 950 can be placed in the highest severity level.

Still other techniques can be used, and some or all of these techniques can be combined. For example, the highest number of severity levels for which there is no duplicate level can be found. This can be done by comparing the parameters used in generating the trend moving average and the long-term moving average. This can also or instead be done by examining similarities among cases in different levels.

When cases are classified, the highest severity scores can identify a smaller number of cases that have long durations and effect a large number of subscribers, while lower severity scores can identify a large number of cases having shorter durations and effect a smaller of subscribers.

**Determination of Severity Level Parameters**

In act 580, once the used cases are classified, representative sets of parameters used to generate the thresholds can be found and provided to a user. The objective can be to find, for each severity level, a set of parameters used to generate a threshold that best identifies the cases in the severity level as compared to any of the other parameters in the set of parameters. That is, a set of parameters that best uniquely identifies a severity level as compared to levels above and below that severity level. The users can then use these parameters in the future.

This set of parameters can be found in various ways. For example, a Wroclaw index, a weighted Wroclaw index, or other algorithm can be used. This algorithm can employ two criteria. The first can be identified by the symbol L, and for a severity level can be defined as the ratio of the sum of minutes raised by a case belonging to that or a higher severity level and the sum of minutes that are part of that severity level or higher. The second criteria can be identified by the symbol C, and for a severity level can be defined as the sum of minutes detected as cases that are part of that severity level or lower. For each trend moving average and long-term moving average, a value W can be found by summing a square of a difference between a value of L for that trend moving average and long-term moving average and a maximum value of L for all trend moving averages and long-term moving averages in the severity level with a square of a difference between a value of C for that trend moving average and long-term moving average and a maximum value of C for all trend moving averages and long-term moving averages in the severity level. The long-term moving average and corresponding set of parameters that have the lowest value of W for that severity level can be stored and provided to a user. In these and other embodiments of the present invention, each square term can be weighted by multiplying with a factor, where the factor can be greater than one, one, or less than one. The set of parameters can be found by determining a minimum value of W using the equation:

$$W = w1 * (L - Lmax)^2 + w2 * (C - Cmax)^2$$

where $w1$ and $w2$ are weighting factors, L is the ratio of the sum of minutes raised by a case belonging to that or a higher severity level and the sum of minutes that are part of that severity level or higher, C is the sum of minutes detected as cases that are part of that severity level or lower, $Lmax$ is the maximum value of L for all cases in the severity level, and $Cmax$ is the maximum value of C for all cases in the severity level.

Also in act 580, the parameters and other information can be provided to a user in a textual, tabular, graphical, or other type of format or types of formats. For example, a case volume severity list can be generated and provided to a user. In these and other embodiments of the present invention, a case volume severity list can include one, two, three, or more than three entries. The entries can be selected by a user and the cases identified can be highlighted on a time-graph of the detect event data. This can allow a user to focus on a reduced number of cases, where the reduced number of cases are important cases and resolving the reduced number of cases can have a large impact.

These and other embodiments of the present invention can provide at least two benefits. First, during set up, an operator does not need to find or determine parameters themselves, since the parameters for the various thresholds are automatically generated. Secondly, an operator can quickly identify a reduced number of cases that each have a disproportionate or outsized impact as compared to other cases.

After a user has selected a case volume severity level from the case volume severity level list, the corresponding parameters can be used again with new or updated data. Alternatively, the parameters can be updated to provide similarly useful results with a new set of data. For example, an entry in a case volume severity level list can provide a number of cases, each having a number of detected events, which can be referred to as a signal. This signal can rise above a background number of detected events, which can be referred to as noise. A first signal-to-noise ratio can be present for data collected and analyzed over a first duration. The parameters can be adjusted to provide a similar signal-to-noise ratio for data collected and analyzed over a second duration, the second duration subsequent to the first duration. The number of identified cases can be the same or different for the updated parameters for the second duration as compared to the parameters in the previously selected entry in the case volume severity level list, though the relevancy and import of the identified cases can be similar.

The parameters used in generating the thresholds can effect threshold values in various ways. Examples are shown in the following figures.

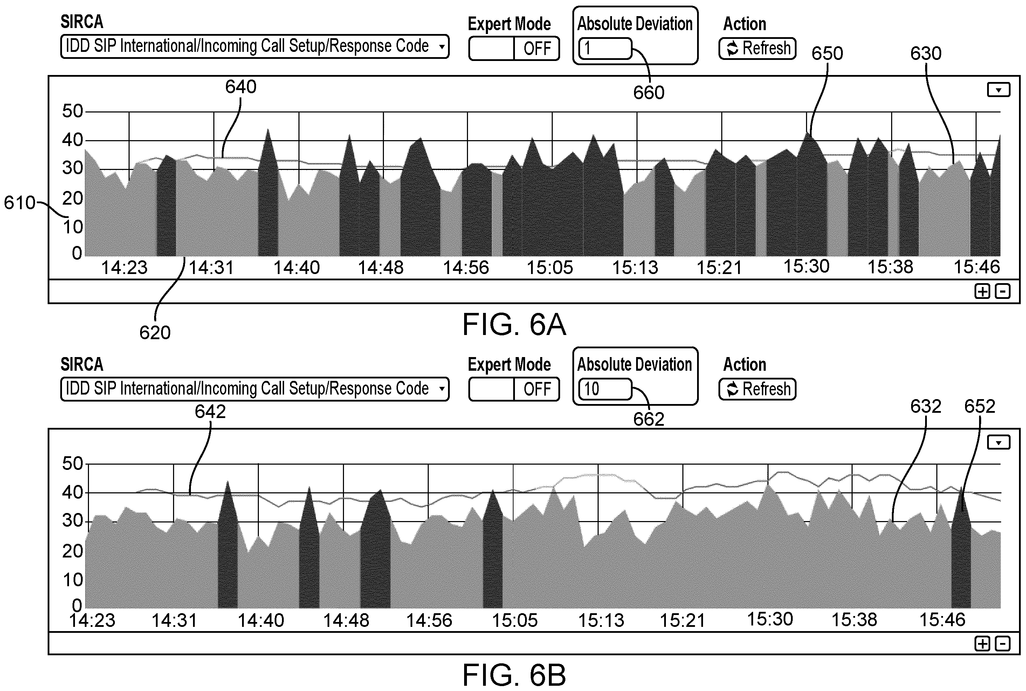

Figures 6A through 6C illustrate effects of varying an absolute deviation in a method of detecting cases according to an embodiment of the present invention. In Figure 6A, a trend moving average 630 and long-term moving average 640 are plotted as a function of value along the X axis 610 and time along the Y axis 620. In this example, the absolute deviation is set to 1, so there is little separation between the trend moving average 630 and long-term moving average 640. This cases the detection of a large number of cases 650, where trend moving average 630 exceeds long-term moving average 640.

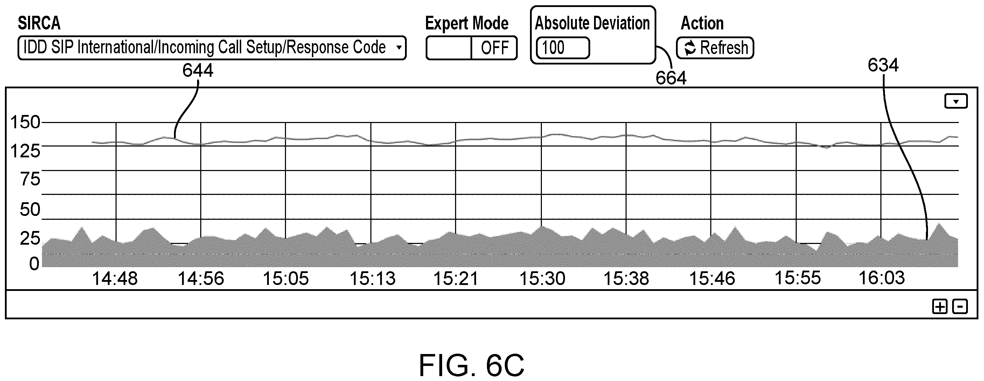

In Figure 6B, the absolute deviation is set to 10, and there is some separation between trend moving average 632 and long-term moving average 642. This has the effect of reducing the number of detected cases 652. In Figure 6C, the absolute deviation is set to 100, and there is more separation between trend moving average 634 and long-term moving average 644. This has the effect of reducing the number of detected cases 654 to zero for this observed time period.

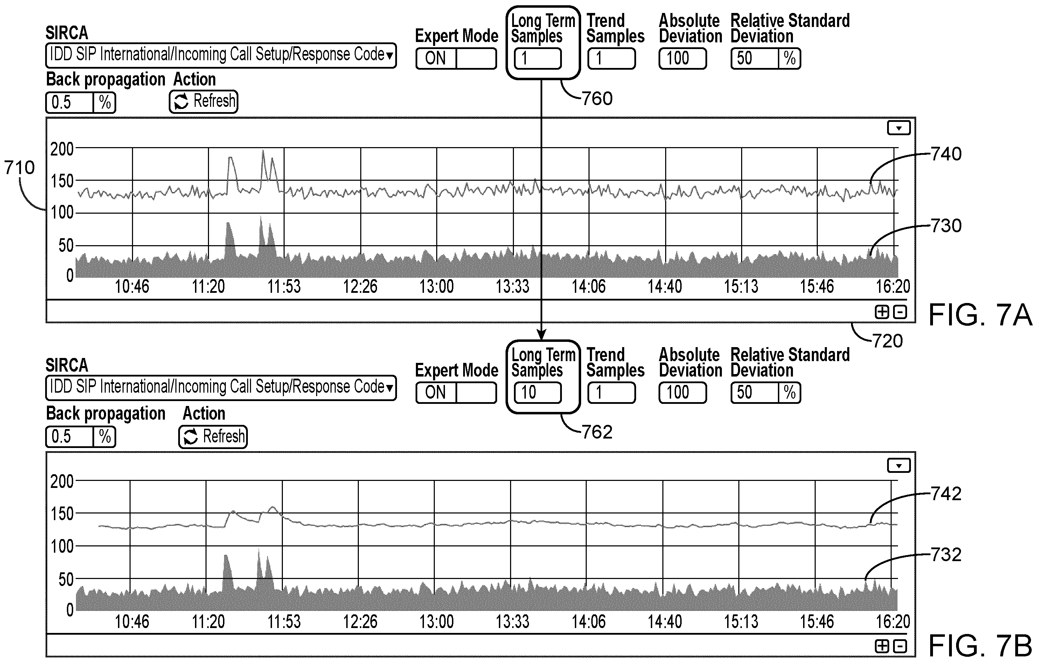

Figures 7A and 7B illustrate an effect of varying a long-term samples parameter in a method of detecting cases according to an embodiment of the present invention. In Figure 7A, a trend moving average 730 and long-term moving average 740 are plotted as a function of value along the X axis 710 and time along the Y axis 720. In this example, the long-term sample parameter is set to 1, so there is no filtering or smoothing of long-term moving average 740. In Figure 7B, the long-term sample parameter is set to 10, and there is some filtering or smoothing of the long-term moving average 742. This can have the effect of reducing the number of detected cases.

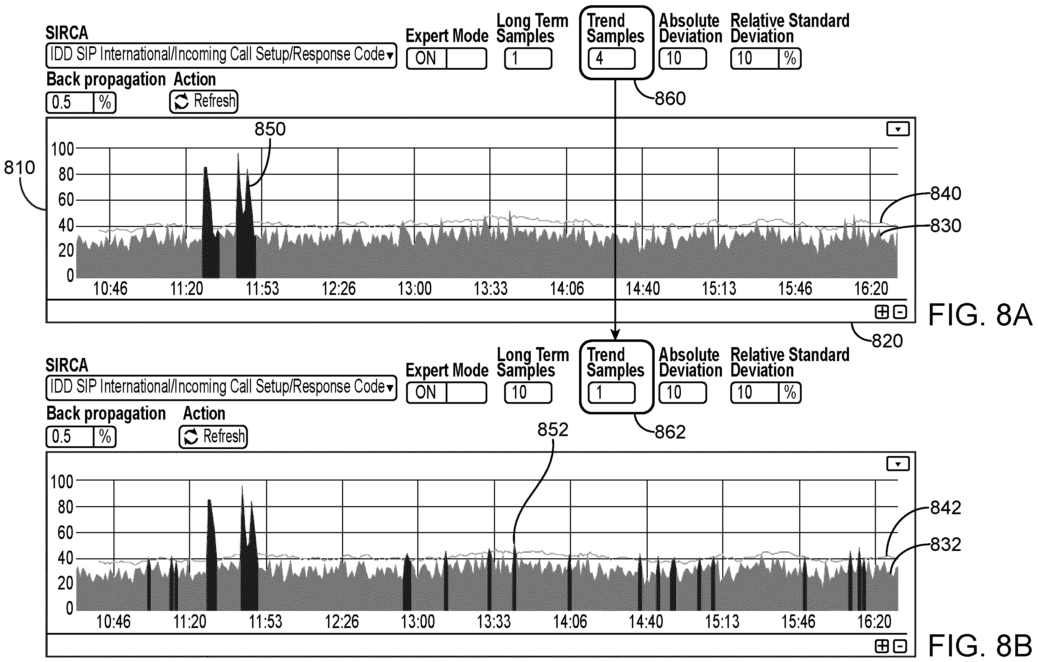

Figures 8A and 8B illustrate an effect of varying a trend samples parameter in a method of detecting cases according to an embodiment of the present invention. In Figure 8A, a trend moving average 830 and long-term moving average 840 are plotted as a function of value along the X axis 810 and time along the Y axis 820. In this example, the trend sample parameter is set to 4, so there some filtering or smoothing of trend moving average 830. In Figure 8B, the long-term sample parameter is set to 1, and there is no filtering or smoothing of the trend moving average 842. This can have the effect of increasing the number of detected cases 852.

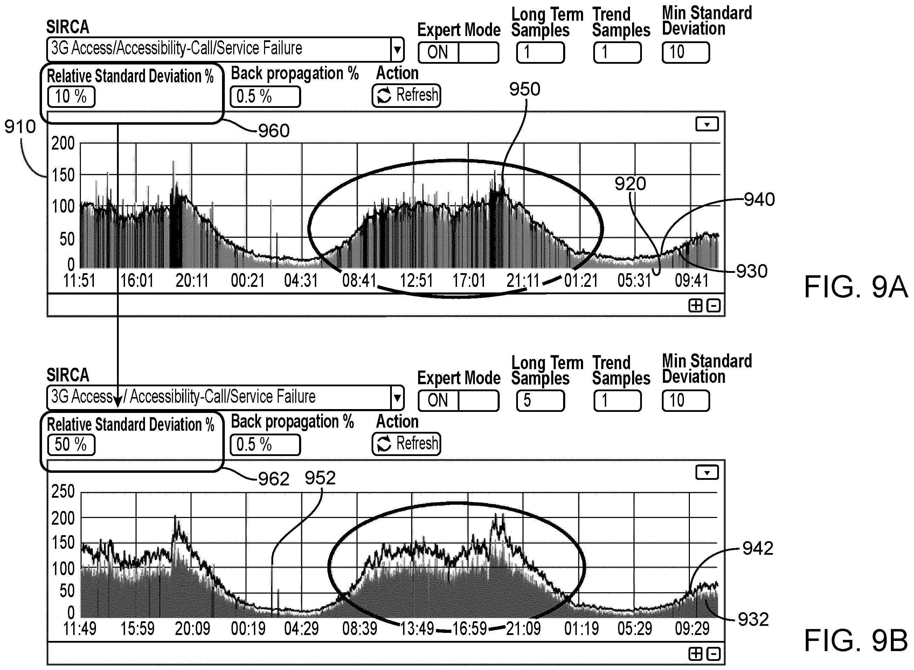

Figures 9A and 9B illustrate an effect of varying relative standard deviation parameter in a method of detecting cases according to an embodiment of the present invention. In Figure 9A, a trend moving average 930 and long-term moving average 940 are plotted as a function of value along the X axis 910 and time along the Y axis 920. In this example, the relative standard deviation is set to 10 percent, so there is little separation between the trend moving average 930 and long-term moving average 940, which can lead to a large number of detected cases 950. In Figure 9B, the relative standard deviation is increased to 50 percent, and there is more separation between the trend moving average 932 and long-term moving average 942, which can lead to a decrease in the number of detected cases 952.

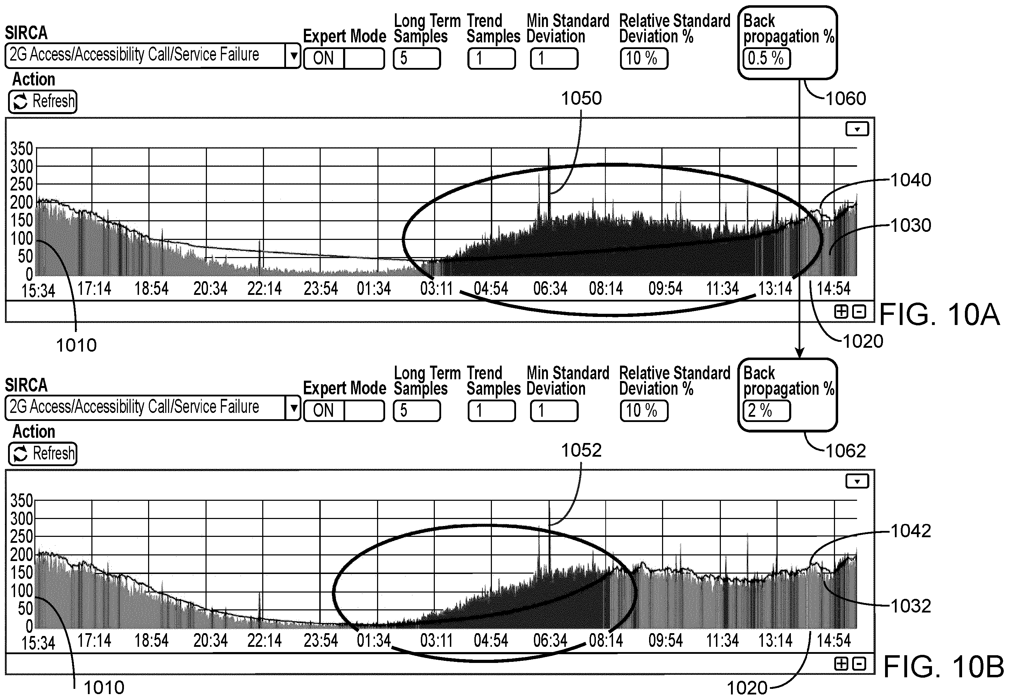

Figures 10A and 10B illustrate an effect of varying a back propagation parameter in a method of detecting cases according to an embodiment of the present invention. In Figure 10A, a trend moving average 1030 and long-term moving average 1040 are plotted as a function of value along the X axis 1010 and time along the Y axis 1020. In this example, the back propagation 1060 is set to 0.5 percent, so older values are not quickly dismissed from the moving average calculations. This can lead to longer cases and large number of detected cases 1050. In Figure 10B, the back propagation 1062 is increased to 2 percent, and older values are more quickly discarded, which can lead to a decrease in the number of detected cases 1052.

Various flowcharts are shown above illustrating methods of generating case volume severity level lists according to an embodiment of the present invention. The acts in these examples can be combined in various ways and performed in various sequences consistent with embodiments of the present invention.

Computer programs incorporating features of the present invention that can be implemented using program code may be encoded and stored on various computer readable storage media; suitable media include magnetic disk or tape, optical storage media such as compact disk (CD) or DVD (digital versatile disk), flash memory, and other non-transitory media. (It is understood that "storage" of data is distinct from propagation of data using transitory media such as carrier waves.) Computer readable media encoded with the program code may include an internal storage medium of a compatible electronic device and/or external storage media readable by the electronic device that can execute the code. In some instances, program code can be supplied to the electronic device via Internet download or other transmission paths.

It should be understood that a computer system or electronic device can include hardware components of generally conventional design (e.g., processors, memory and/or other storage devices, user interface components, network interface components) and that program code or other instructions can be provided to the computer system or electronic device to cause the system to perform computations and/or other processes implementing embodiments described herein or aspects thereof.

Additionally, in some instances, well-known methods, procedures, components, and circuits have not been described in detail so as not to obscure the present disclosure. It is intended that all embodiments disclosed herein can be implemented separately or combined in any way and/or combination. Aspects described with respect to one embodiment can be incorporated in different embodiments although not specifically described relative thereto. That is, all embodiments and/or features of any embodiments can be combined in any way and/or combination.

The above description of embodiments of the invention has been presented for the purposes of illustration and description. It is not intended to be exhaustive or to limit the invention to the precise form described, and many modifications and variations are possible in light of the teaching above. The embodiments were chosen and described in order to best explain the principles of the invention and its practical applications to thereby enable others skilled in the art to best utilize the invention in various embodiments and with various modifications as are suited to the particular use contemplated. Thus, it will be appreciated that the invention is intended to cover all modifications and equivalents within the scope of the following claims.

## Claims

1. A method of generating a case volume severity level list of anomalies in a network, the method comprising:

   collecting data over a first period of time;
   selecting a detection algorithm;
   performing detection analysis using the detection algorithm on the collected data to generate a set of detected events;
   determining a plurality of cases in the set of detected events;
   determining a severity score for each of the plurality of cases;
   sorting the plurality of cases into a plurality of clusters;
   assigning each cluster to a severity level; and
   providing information regarding the cases in each severity level and the severity score of the cases in each severity level.

2. The method of claim 1 wherein determining the plurality of cases in the set of detected events comprises using an exponentially-weighted moving average.

3. The method of claim 2 wherein the plurality of cases are determined using a set of parameters, the set of parameters comprising a number of long-term samples, a number of trend samples, an absolute deviation, and a relative standard deviation.

4. The method of claim 1 wherein the severity score for each case in the plurality of cases is calculated using a maximum value during a case, an average value of a number of events during a case, and a length of the case, and wherein providing information regarding cases in each severity level comprises providing the information regarding cases in each severity level using a graphical-user interface.

5. The method of claim 1 wherein sorting the plurality of cases into a plurality of clusters comprises sorting the plurality of cases into a plurality of clusters using a k-means algorithm.

6. The method of claim 5 wherein the information regarding the cases in each severity level comprises a set of parameters.

7. The method of claim 6 wherein the set of parameters for each severity level is found using a Wroclaw index.

8. A method of generating a case volume severity level list of anomalies in a network, the method comprising:

   determining a plurality of cases in a set of detected events;
   determining a severity score for each of the plurality of cases;
   clustering the plurality of cases into a plurality of severity levels based on their severity score; and
   providing information regarding the plurality of severity levels to a user.

9. The method of claim 8 further comprising:

   determining values for each of a set of parameters for each severity level; and
   providing the values for each of the set of parameters for each severity level.

10. The method of claim 9 wherein the set of parameters comprises a number of long-term samples, a number of trend samples, an absolute deviation, and a relative standard deviation.

11. The method of claim 9 wherein the severity score for each case in the plurality of cases is calculated using a maximum value during a case, an average value of a number of events during a case, and a length of the case, and wherein providing information regarding the plurality of severity levels to a user comprises providing information regarding the plurality of severity levels to a user using a graphical-user interface.

12. The method of claim 11 wherein sorting the plurality of cases into a plurality of clusters comprises sorting the plurality of cases into a plurality of clusters using a k-means algorithm.

13. The method of claim 12 wherein the set of parameters for each severity level is found using a Wroclaw index.

14. A method of generating a case volume severity level list of anomalies in a network, the method comprising providing a plurality of sets of data, each set of data comprising:

a number of cases; and
a value for each parameter in a set of parameters, where the value of each parameter in the set of parameters is used to determine the number of cases.

15. A computer readable medium storing code for executing the method according to any one of claim 1, claim 8, or claim 14.

COLLECT DATA OVER A FIRST PERIOD OF TIME — 110

DETECT CASES AND DETERMINE WHICH CASES TO USE, THEN RANK USED CASES — 120

CLASSIFY CASES INTO SEVERITY LEVELS — 130

PROVIDE PARAMETERS FOR EACH SEVERITY LEVEL — 140

FIG. 1

| Severity (220) | Max. Average Severity Score (230) | Max. Distinct Cases (240) | Max. Average Case Length (250) | Max. Average Case Max (260) | Max. Average CaseValue (270) |
|---|---|---|---|---|---|
| 1 | 9,0 | 288,0 | 13,5 | 118,9 | 65,6 |
| 2 | 8,1 | 327,0 | 11,0 | 114,7 | 71,0 |
| 3 | 9,9 | 262,0 | 11,7 | 127,1 | 77,2 |
| 4 | 19,4 | 129,0 | 12,1 | 192,9 | 111,5 |
| 5 | 26,3 | 93,0 | 15,5 | 225,0 | 113,0 |
| 6 | 33,7 | 73,0 | 11,7 | 262,3 | 157,6 |
| 7 | 62,8 | 38,0 | 14,4 | 357,1 | 189,3 |
| 8 | 90,1 | 26,0 | 14,7 | 396,6 | 195,6 |
| 9 | 93,7 | 25,0 | 12,1 | 406,2 | 212,6 |
| 10 | 517,4 | 4,0 | 24,5 | 707,4 | 246,1 |

210

200

FIG. 2A

EP 4 440 059 A1

| ⬡ Case Volume Configuration | | | | | | | | | |
|---|---|---|---|---|---|---|---|---|---|
| Severity Level | Number of Cases | Avg. Case Max | Avg. Case Duration | Analysed From | Analysed To | Long Term Samples | Short Term Samples | Absolute Deviation | Relative Deviation |
| 1 | 1 | 15 | 25 | Mon, Jan 31, 00:00 | Tue, Feb 15, 00:00 | 6 | 3 | 26 | 26 % |
| 2 | 3 | 12 | 20 | Mon, Jan 31, 00:00 | Tue, Feb 15, 00:00 | 5 | 2 | 25 | 25 % |
| 3 | 5 | 10 | 15 | Mon, Jan 31, 00:00 | Tue, Feb 15, 00:00 | 10 | 5 | 30 | 30 % |
| 4 | 8 | 8 | 12 | Mon, Jan 31, 00:00 | Tue, Feb 15, 00:00 | 8 | 5 | 22 | 27 % |
| 5 | 15 | 8 | 5 | Mon, Jan 31, 00:00 | Tue, Feb 15, 00:00 | 3 | 1 | 23 | 20 % |

281
282 284 286 288 290 292 293 294 296 298
280

## FIG. 2B

EP 4 440 059 A1

FIG. 3

RECEIVE NEW VALUE OF DETECTED EVENTS — 410

UPDATE TREND EWMA TO GENERATE CURRENT TREND VALUE — 420

DETERMINE PREVIOUS LONG-TERM EWMA PLUS THE ABSOLUTE STANDARD DEVIATION — 430

DETERMINE PRODUCT OF PREVIOUS LONG-TERM EWMA AND 1 PLUS THE RELATIVE STANDARD DEVIATION PERCENTAGE — 440

450

IS CURRENT TREND VALUE GREATER THAN BOTH 430 AND 440?     NO

YES     460

IDENTIFY NEW VALUE OF DETECTED EVENTS AS CASE

470

ADD NEW VALUE OF DETECTED EVENTS TO LONG-TERM EWMA

FIG. 4

COLLECT DATA FOR FIRST PERIOD OF TIME, THEN PERFORM DETECTION ANALYSIS USING DETECTION ALGORITHM TO GENERATE SET OF DETECTED EVENTS — 510

SELECT A NUMBER OF SETS OF VALUES FOR A SET OF PARAMETERS — 520

FOR EACH SET OF VALUES, GENERATE TREND AND LONG-TERM MOVING AVERAGES — 530

FOR EACH THRESHOLD, IDENTIFY CASES WHERE TREND MOVING AVERAGE EXCEEDS LONG-TERM MOVING AVERAGE — 540

DETERMINE WHICH CASES HAD SUFFICIENT DURATION TO USE — 550

CALCULATE SEVERITY SCORE FOR EACH USED CASE — 560

CLASSIFY USED CASES INTO SEVERITY LEVELS BASED ON SEVERITY SCORE — 570

FOR EACH SEVERITY LEVEL, DETERMINE PARAMETERS FOR DETERMINED THRESHOLD AND PROVIDE TO USER — 580

FIG. 5

FIG. 6A

FIG. 6B

FIG. 6C

**FIG. 7A**

SIRCA
IDD SIP International/Incoming Call Setup/Response Code ▾
Back propagation  Action
0.5 %   ↻ Refresh

Expert Mode  Long Term Samples  Trend Samples  Absolute Deviation  Relative Standard Deviation
ON   1   1   100   50 %
760
710  740  730  720

200 150 100 50 0
10:46  11:20  11:53  12:26  13:00  13:33  14:06  14:40  15:13  15:46  16:20

**FIG. 7B**

SIRCA
IDD SIP International/Incoming Call Setup/Response Code ▾
Back propagation  Action
0.5 %   ↻ Refresh

Expert Mode  Long Term Samples  Trend Samples  Absolute Deviation  Relative Standard Deviation
ON   10   1   100   50 %
762
742  732

200 150 100 50 0
10:46  11:20  11:53  12:26  13:00  13:33  14:06  14:40  15:13  15:46  16:20

EP 4 440 059 A1

EP 4 440 059 A1

SIRCA

| | Expert Mode | Long Term Samples | Trend Samples | Absolute Deviation | Relative Standard Deviation |
|---|---|---|---|---|---|

IDD SIP International/Incoming Call Setup/Response Code ▾    ON    1    4    10    10 %

Back propagation  Action

0.5  %    ⟳ Refresh

850

810

820    840    830

860

FIG. 8A

SIRCA

| | Expert Mode | Long Term Samples | Trend Samples | Absolute Deviation | Relative Standard Deviation |
|---|---|---|---|---|---|

IDD SIP International/Incoming Call Setup/Response Code ▾    ON    10    1    10    10 %

Back propagation  Action

0.5  %    ⟳ Refresh

852    842    832

862

FIG. 8B

FIG. 9A

FIG. 9B

FIG. 10A

SIRCA | Expert Mode | Long Term Samples | Trend Samples | Min Standard Deviation | Relative Standard Deviation % | Back propagation %
2G Access/Accessibility Call/Service Failure | ON | 5 | 1 | 1 | 10 % | 0.5 %

Action
Refresh

1050
1060
1040
1030
1010
1020

FIG. 10B

SIRCA | Expert Mode | Long Term Samples | Trend Samples | Min Standard Deviation | Relative Standard Deviation % | Back propagation %
2G Access/Accessibility Call/Service Failure | ON | 5 | 1 | 1 | 10 % | 2 %

Action
Refresh

1052
1062
1042
1032
1010
1020

EP 4 440 059 A1

Europäisches
Patentamt

European
Patent Office

Office européen
des brevets

**EUROPEAN SEARCH REPORT**

Application Number

EP 24 16 8085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/177611 A1 (BHARRAT SHAUN JAIKARRAN [US] ET AL) 4 June 2020 (2020-06-04)<br>* paragraph [0104] - paragraph [0113] *<br>* paragraph [0284] - paragraph [0387]; claims; figures *<br>----- | 1-15 | INV.<br>H04L41/0604<br>H04L41/0631<br>H04L41/142<br>H04L41/16 |
| X | US 2017/302506 A1 (JINKA PREETAM [US] ET AL) 19 October 2017 (2017-10-19)<br>* paragraph [0031] - paragraph [0087]; claims; figures *<br>----- | 1-15 | ADD.<br>H04L41/22 |
| X | US 2019/235944 A1 (VELIPASAOGLU OMER EMRE [US] ET AL) 1 August 2019 (2019-08-01)<br>* paragraph [0106] - paragraph [0292] *<br>* paragraph [0332] *<br>* paragraph [0387] - paragraph [0438]; claims; figures *<br>----- | 1-15 | |
| X | BING LI ET AL: "Anomaly detection for cellular networks using big data analytics",<br>IET COMMUNICATIONS, THE INSTITUTION OF ENGINEERING AND TECHNOLOGY, GB,<br>vol. 13, no. 20,<br>1 December 2019 (2019-12-01), pages 3351-3359, XP006097792,<br>ISSN: 1751-8628, DOI:<br>10.1049/IET-COM.2019.0765<br>* the whole document *<br>----- | 1-15 | |

TECHNICAL FIELDS SEARCHED (IPC)

H04L

The present search report has been drawn up for all claims

| Place of search | Date of completion of the search | Examiner |
|---|---|---|
| Munich | 1 August 2024 | Ceccarini, Giulio |

EPO FORM 1503 03.82 (P04C01)

## EP 4 440 059 A1

## ANNEX TO THE EUROPEAN SEARCH REPORT
## ON EUROPEAN PATENT APPLICATION NO.

EP 24 16 8085

01-08-2024

| Patent document cited in search report | Publication date | Patent family member(s) | Publication date |
|---|---|---|---|
| US 2020177611 A1 | 04-06-2020 | US 2020177611 A1<br>US 2022272114 A1 | 04-06-2020<br>25-08-2022 |
| US 2017302506 A1 | 19-10-2017 | NONE | |
| US 2019235944 A1 | 01-08-2019 | US 2016217022 A1<br>US 2019235944 A1 | 28-07-2016<br>01-08-2019 |

EPO FORM P0459

**EP 4 440 059 A1**

**REFERENCES CITED IN THE DESCRIPTION**

**Patent documents cited in the description**

- US 12937223